# EUROPEAN PATENT SPECIFICATION

(11) **EP 1 187 876 B1**
(45) Date of publication and mention of the grant of the patent: **23.04.2003**
(21) Application number: 00935303.8
(22) Date of filing: 22.05.2000
(51) Int. Cl.: C08L 23/04

(54) **INJECTION MOULDING**
POLYMERMISCHUNGEN VERWENDENDES SPRITZGIESSVERFAHREN
MOULAGE PAR INJECTION

(30) Priority: 21.05.1999 GB 9911934
(43) Date of publication of application: 20.03.2002
(73) Proprietor: Borealis Technology Oy, 06101 Porvoo (FI)
(72) Inventor: LINDAHL, Ann, Dristin, N-3960 Stathelle (NO); AUGESTAD, Morten, N-3960 Stathelle (NO); NYGAARD, Heidi, Faukald, N-3960 Stathelle (NO); BAANN, Hege, Vale, N-3960 Stathelle (NO)
(74) Representative: Campbell, Neil Boyd
(86) International application number: GB0001959
(87) International publication number: WO00071615

(56) References cited:
- EP-A- 0 423 962
- US-A- 4 451 873
- US-A- 5 306 775
- US-A- 5 494 965
- US-A- 5 804 660
- SEPPALA J V ET AL: "Effect of polymerization temperature on the polymerization of ethylene with dicyclopentadienylzirconiumdichloride/meth ylalumoxane catalyst" EUROPEAN POLYMER JOURNAL,GB,PERGAMON PRESS LTD. OXFORD, vol. 32, no. 3, 1 March 1996 (1996-03-01), pages 331-335, XP004075819 ISSN: 0014-3057

## Description

The invention relates to improvements in and relating to high density polyethylenes (HDPE) and in particular to the use of HDPE for injection moulding.

HDPE is a polymer which is often used for the production by injection moulding of products used for packaging or containers. The HDPE materials conventionally used for these purposes are generally monomodal polyethylenes prepared using Ziegler-Natta catalysts.

Where products are produced by injection moulding, it is important that the warpage in the product be low as otherwise the physical appearance of the product is poor.

Moreover, where an injection moulded HDPE product is to be used to contain liquids where spillage would be environmentally undesirable, it is important that the moulded polymer is resistant to stress cracking. This may be measured by the environmental stress crack resistance (ESCR) test, a standardized ASTM test (e.g. ASTM D1693. Cond B).

The standard commercially available HDPE injection moulding materials however have unsatisfactorily low ESCR values and thus are unsuitable for the production of injection moulded containers or other packaging materials for liquid chemical products, such as liquid chemicals, glues, paints, varnishes, solvent-based soaps etc.

The polymers used for injection moulding are monomodal (ie. with a single peak in their molecular weight distributions). This is in order to avoid warpage.

However, despite the conventional wisdom that it is essential to use monomodal HDPE for injection moulding, we have now surprisingly found that by using bimodal or multimodal HDPE wherein at least one of the polyethylene components is an ethylene copolymer, it is possible to produce injection moulded products with improved ESCR and warpage.

Viewed from one aspect the invention thus provides the use in injection moulding, preferably in injection moulding of liquids containers, caps and closures, of a HDPE having a density of 950 to 980 kg/m³ and a crystallinity of 60 to 90% comprising at least two polyethylene components having different molecular weight distributions wherein at least one of said components is an ethylene copolymer.

While the different components may both be ethylene copolymers and while one may be an ethylene homopolymer, the components cannot both be ethylene homopolymers. Where one of the components is an ethylene homopolymer, this is preferably the component with the lower weight average molecular weight (Mw), e.g. where Mw is 5000 to 100000 D, more preferably 20000 to 40000 D.

Viewed from a further aspect the invention provides an injection moulded liquids container, preferably a container for liquids comprising an organic solvent, the walls whereof are formed from a HOPE having a density of 950 to 980 kg/m³ and a crystallinity of 60 to 90% comprising at least two polyethylene components having different molecular weight distributions wherein at least one of said components is an ethylene copolymer.

Viewed from a further aspect the invention provides an injection or extrusion moulded cap or closure, preferably a cap or closure for a container for beverages or liquids comprising an organic solvent, which cap or closure is formed from a HDPE having a density of 950 to 980 kg/m³ and a crystallinity of 60 to 90% comprising at least two polyethylene components having different molecular weight distributions wherein at least one of said components is an ethylene copolymer.

Viewed from a further aspect the invention provides an HDPE for use in injection moulding, comprising at least two polyethylene components, wherein at least one said component is an ethylene copolymer and wherein at least the component with the lowest weight average molecular weight is an ethylene homopolymer.

By polyethylene is meant a polymer the majority by weight of which derives from ethylene monomer units. Minor comonomer contributions, e.g. up to 20% by weight more preferably up to 10% by weight, may derive from other copolymerizable monomers, generally C₃₋₂₀, especially C₃₋₁₀, comonomers, particularly singly or multiply ethylenically unsaturated comonomers; in particular C₃₋₁₀ α-olefins such as propene, but-1-ene, hex-1-ene, 4-methyl-pent-1-ene etc. It may be noted that the term ethylene copolymer is used herein to relate to a polyethylene deriving from ethylene and one or more such copolymerisable comonomers. Moreover, the polyethylene may contain minor, e.g up to 10% by weight, preferably up to 5% by weight of other polymers, e.g. other polyolefins in particular polypropylenes, as well as additives such as colours, fillers, radiation stabilizers, antioxidants, etc., generally in amounts of up to 10% by weight, preferably up to 5% by weight.

By HOPE is meant a polyethylene having a density of 950 to 980 kg/m³, preferably 950 to 975 kg/m³, especially 950 to 965 kg/m³ and a crystallinity of 60 to 90%, preferably 70 to 90%.

The HOPE according to the invention is a bimodal or multimodal polymer. By bimodal (or multimodal), it is meant that the polymer consists of at least two fractions (components), one of which has a relatively low molecular weight and a relatively high density and another of which has a relatively high molecular weight and a relatively low density. Typically the molecular weight distribution (MWD) of a polymer produced in a single polymerization stage using a single monomer mixture, a single polymerization catalyst and a single set of process conditions (ie. temperature, pressure etc.) will show a single maximum, the breadth of which will depend on catalyst choice, reactor choice, process conditions, etc, ie. such a polymer will be monomodal.

A bimodal or multimodal polyethylene may be produced by blending two or more monomodal polyethylenes having differently centred maxima in their MWDs. Alternatively and preferably the bimodal polyethylene may be produced by polymerization using conditions which create a bimodal or multimodal polymer product, e.g. using a catalyst system or mixture with two or more different catalytic sites, using two or more stage polymerisation process with different process conditions in the different stages (e.g. different temperatures, pressures, polymerisation media, hydrogen partial pressures, etc).

Such a bimodal (or multimodal) HOPE may be produced relatively simply by a multistage ethylene polymerization, e.g. using a series of reactors, with comonomer addition in only the reactor(s) used for production of the higher/highest molecular weight component(s). Examples of bimodal PE production are given in EP-A-778289 and WO92/12182.

If an ethylene homopolymer component is produced by slurry polymerization involving use of recycled diluent, that diluent may contain small amounts of higher α-olefins as contaminants. Likewise where an earlier polymerization stage has produced an ethylene copolymer component, small amounts of comonomer may be carried over to an ethylene homopolymerization stage.
Accordingly, by ethylene homopolymer is meant herein a polymer containing at least 99.9% by weight of ethylene units. Likewise as in a multistage/multireactor polymerization using more than one catalyst system, the homopolymerization catalysts may be at least partially active during the copolymerization reaction, any copolymer component making up less than 5% by weight of the total polymer shall not be considered to be the lowest molecular weight component in an HDPE according to the invention.

The copolymer component(s) of the HDPE used according to the invention will generally contain at least 0.1% by weight, preferably at least 0.5% by weight of non-ethylene monomer units, e.g. 0.5 to 6% of such comonomer units.

The polymerization reactions used to produce the HDPE of the invention may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662). The catalyst systems used may likewise be any conventional systems, e.g. chromium catalysts, Ziegler-Natta and metallocene or metallocene:aluminoxane catalysts, either homogeneous or more preferably heterogeneous catalysts, e.g. catalysts supported on inorganic or organic particulates, in particular on magnesium halides or inorganic oxides such as silica, alumina or silica-alumina. For the preparation of the high molecular weight component in particular it is especially desirable to use supported Ziegler-Natta catalysts as the molecular weight can then conveniently be controlled using hydrogen. It is also possible to use supported metallocene catalysts as it is particularly straightforward to select desired molecular weights by appropriate selection of particular metallocenes. The metallocenes used will typically be group IVa to VIa metals (in particular Zr or Hf) complexed by optionally substituted cyclopentadienyl groups, e.g. groups carrying pendant or fused substituents optionally linked together by bridging groups. Suitable metallocenes and aluminoxane cocatalysts are widely described in the literature, e.g. the patent publications of Borealis, Hoechst, Exxon, etc.

Typically and preferably however the HOPE will be prepared using multistage polymerization using a single catalyst system or a plurality of catalyst systems, e.g. two or more metallocenes, one or more metallocenes and one or more Ziegler-Natta catalysts, two or more chromium catalysts, one or more chromium catalysts and one or more Ziegler-Natta catalysts, etc. Especially preferably the same catalyst system is used in the different polymerization stages, e.g. a catalyst system as described in EP-A-688794.

The properties of the HDPE used according to the invention preferably have the following values:

### Low molecular weight component:

MFR₂ of 50-1000 g/10 min, preferably 200-800 g/10 min, measured according to ISO 1133 at 190°C and under 2.16 kg load;
weight average molecular weight of 5-50 kD, preferably 20-40 kD;
preferably a homopolymer or a copolymer with density higher than 965 kg/m³, most preferably a homopolymer;
comprises 10-90% by weight, preferably 40-60% by weight of the total polyethylene in the composition.

### High molecular weight component:

Has molecular weight and comonomer content such that the final polymer composition has the desired preset MFR and density;
weight average molecular weight of 150-400 kD;
comprises 10-90% by weight, preferably 40-60% by weight of the total polyethylene in the composition, i.e. low mw:high mw component weight ratio is 10:90 to 90:10, preferably 40:60 to 60:40.

### Final polymer composition:

MFR₂ of 2-100 g/10 min, preferably 3-50 g/10 min, in particular 4-20 g/10 min, measured according to ISO 1133 at 190° and under 2.16 kg load;
weight average molecular weight of 80-200, preferably 100-180 kD;
molecular weight distribution (ratio of the weight average molecular weight to the number average molecular weight) of 5-100, preferably 10-60, more preferably 14-45;
density of 940-980 kg/m³, preferably 945-975 kg/m³, in particular 950-965 kg/m³;
comonomer content of 0.2-10% by weight, preferably 1-3% by weight, as measured by FTIR;
crystalline melting point between 120 and 140°C, as determined by DSC analysis;
crystallinity of 60-90%, as determined by DSC analysis.

### Injection moulded article made from the polymer composition:

ESCR F₅₀ higher than 10 h, preferably higher than 40 h, measured according to ASTM D1693, Condition B;
improvement in ESCR, measured as above, relative to a standard unimodal material HE7004 (manufactured and sold by Borealis) of 50-1000%, preferably of 500-1000%;
E-modulus of at least 800 MPa (measured according to ISO 527-2);
Impact strength of 30-200 kJ/m² (measured according to ISO 8256-A).

Such HDPE may typically be prepared in a one or more stage polymerization, with the catalyst systems and process conditions in the individual stages being selected to produce polyethylene components of average molecular weights 5 to 100 kD and 150 to 400 kD in abundances of 1:9 to 9:1.

For injection moulding of the resultant HDPE, conventional moulding equipment may be used, e.g. operating at an injection temperature of 190 to 275°C, Typically containers produced in this fashion will have a volume of 100 mL to 100 L and caps and closures will typically have maximum dimensions of 10 to 600 mm.

The injection moulding compositions of the invention have the further advantage of improved flow. This may be demonstrated using the 'spiral test'. In this procedure an Engel ES330/65 injection moulding apparatus is used with a spiral mould with a depth of 1, 2 or typically 3 mm. The composition flow rate at 230°C under 300, 500 and 700 bar follow up pressures is determined on the length of flow in the spiral. Typically a composition according to the invention with an MFR₂ value of about 4 g/10 min behaves like a conventional polyethylene with MFR₂ of about 8 g/10 min. See Table 1 below.

**Table 1**

| Modality | MFR₂*(g/10 min) | Flow (cm) at pressure (p) (bar) | | |
|---|---|---|---|---|
| | | p=300 | p=500 | p=700 |
| Bimodal | 4 | 32.6 | 47.5 | 61.3 |
| Unimodal | 2 | 21.5 | 32.3 | 41.6 |
| Unimodal | 4 | 27.1 | 39.8 | 52.5 |
| Unimodal | 8 | 35.2 | 50.2 | 65.2 |
| Unimodal | 12 | 40.8 | 57.2 | 72.5 |

| | | | | |
|---|---|---|---|---|
| * measured according to ISO 1133 | | | | |

Besides being useful for injection moulding, it has also been found that the bimodal and multimodal HDPEs used according to the invention are particularly useful for extrusion coating, e.g. of paper or other substrates, producing coatings with low water vapor permeability and good coating draw down rates. Such use of the bimodal and multimodal HDPE's (especially ones with densities in excess of 935 kg/m³) forms a further aspect of the invention.

Viewed from a still further aspect the invention provides an HDPE comprising at least two polyethylene components, wherein at least one said component is an ethylene copolymer and wherein at least the component with the lowest weight average molecular weight is an ethylene homopolymer and having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90%.

Viewed from a yet further aspect the invention provides an HDPE moulding composition comprising a particulate HOPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90% together with at least one additive or further polymer.

Viewed from another aspect the invention provides an injection moulded article formed at least in part from an HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and crystallinity 60 to 90%.

The invention will now be described further by reference to the following non-limiting Examples:

### Example 1

### Blended Bimodal HDPE

Two bimodal polyethylene compositions (Samples 1 and 2) were prepared by mixing two of the three polyethylene components (A, B and C) listed in Table 1 into blends using an extruder (Werner & Pfleider ZSK 30W) operating at 193-194°C.

**Table 1**

| Component Property | Component A | B | C |
|---|---|---|---|
| Mw(kD) | 190 | 400 | 28 |
| Mn (kD) | 6 | 56 | 2.5 |
| MWD | 32 | 7 | 11 |
| MFR₂₁ (g/10 min) | 33 | 0.1 | 400* |
| Density (kg/m³) | 955 | 927 | 974 |

| | | | |
|---|---|---|---|
| *MFR₂ | | | |

Sample 1 comprised 40% wt component C and 60% wt component A. Sample 2 comprised 60% wt component C and 40 wt% component B.

The properties of the blends are shown in Table 2 below.

### Example 2

### Reactor Produced Bimodal HDPE

Into a 50 dm³ loop reactor, operated at 80°C and 65 bar, was introdcued 1 kg/hour ethylene, 22 kg/hour propane, 2g/hour hydrogen and the polymerization catalyst of Example 3 of EP-B-688794 (loaded on 20 micron silica) in a quantity such that PE production rate was 6.8 kg PE/hour. The MFR₂ and density of the product are estimated at 30 g/10 min and 970 kg/m³ respectively.

The slurry was continuously removed from the loop reactor and introduced into a second loop reactor having a volume of 500 dm³ operating at 95°C and 60 bar. Additional ethylene, propane and hydrogen were added so as to produce a polyethylene at 27 kg/hour having MFR₂ 500 g/10 min and density 974 kg/m³. The polymer (still containing the active catalyst) was separated from the reaction medium and transferred to a gas phase reactor where additional hydrogen, ethylene and 1-butene comonomer were added so as to produce a polyethylene at 70 kg/hour having MFR₂ 4 g/10 min and density 953 kg/m³. The fraction of high MFR (low MW) material in the total polymer was thus 40%. Three samples, denoted 3, 4 and 5, were produced in this manner.

The properties of samples 1 to 5 are set out in Table 2 below.

A commercially available unimodal reference material HE 7004 (Borealis) was similarly evaluated. The results are designated R1.

**Table 2**

| Samples: | 1 | 2 | 3 | 4 | 5 | R1 | R2 |
|---|---|---|---|---|---|---|---|
| Mw Weight Average | 121 | 170 | 102 | 106 | 105 | 105 | 70 |

| Molecular Weight (kD) | | | | | | | |
|---|---|---|---|---|---|---|---|
| Mn Number Average | 4.2 | 4.1 | 7 | 7.4 | 7.2 | 16 | 13 |

| Molecular Weight (kD) | | | | | | | |
|---|---|---|---|---|---|---|---|
| MWD | 29 | 41 | 14.5 | 14.3 | 14.2 | 6 | 5.5 |
| MFR₂ g/10 min¹ | 2.6 | 1.7 | 3.9 | 3.2 | 4.8 | 4.0 | 12 |
| Density (kg/m³)² | 963 | 956 | 953 | 953 | 957 | 954 | 964 |
| Ratio LMW/HMW | 40/60 | 60/40 | 40/60 | 40/60 | 40/60 | | |
| ESCR, F50 (hours)³ | 46 | 86 | 46 | 43 | | 9 | |
| ESCR improvement (%) | 411 | 856 | 411 | 378 | | 0 | |
| E-modulus (kPa)⁴ | 1080 | 930 | 880 | 830 | | 850 | |
| Comonomer content | 0.5 | 1.1 | 1.4 | 1.4 | | <0.1 | |

| (wt %) | | | | | | | |
|---|---|---|---|---|---|---|---|
| | | | | | | | |

| | | | | | | | |
|---|---|---|---|---|---|---|---|
| ¹MFR₂ determined at 190°C using 2.16 kg load according to ISO 1133 | | | | | | | |
| ²Density determined using ISO 1183 | | | | | | | |
| ³ESCR, F50 determined using ASTM D1693, Cond.B | | | | | | | |
| ⁴E-modulus determined using ISO 527-2 | | | | | | | |

Table 2 clearly shows the bimodal HDPE to have superior ESCR properties.

Samples 3 and 4 in particular had excellent warpage and shrinkage properties.

### Example 3

### Injection Moulding

Using Samples 1 and 2 of Example 1, pails were produced by injection moulding. Specimens were cut from the walls of the pails and placed in a liquid containing 25 or 40% turpentine. Both samples produced products which showed approvable swell behaviour and stiffness in this test.

### Example 4

### Extrusion Coating

Extrusion coating runs were made on a beloit pilot line using UG paper of 70 g/m² weight. The coating was a coextruded structure comprising a commercially available LDPE (LE 7518 from Borealis) and Sample 5 of Example 2 above at coating weights of 20 and 10 g/m² respectively. The structure was thus paper -LE 7518 - sample 5. Corona treatment was used to improve adhesion to paper. Different line speeds were tested between 100 and 500 m/min and line behaviour was acceptable even at the highest speed. A sample was taken and tested for water vapour transmission rate (WVTR) (measured at 90% relative humidity and 38°C according to ASTM - E96). WVTR was found to be 10.3 g/m²/24 hours.)

By way of comparison, a coated structure was produced in the same way using a commercially available unimodal HDPE (HE 7012 from Borealis, R2 in Table 2 above) in place of Sample 5. The WVTR was found to be 11.8g/m²/24 hour, i.e. a higher value even though the density of R2 is greater than that of Sample 5.

The bimodal HDPE thus has improved barrier properties relative to conventional materials.

## Claims

1. The use in injection moulding or extrusion coating of a HDPE having a density of 950 to 980 kg/m³ and a crystallinity of 60 to 90% comprising at least two polyethylene components having different molecular weight distributions wherein at least one of said components is an ethylene copolymer.

2. Use as claimed in claim 1 of a said HDPE for injection moulding of liquids containers, closures or caps.

3. Use as claimed in either of claims 1 or 2 of an HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90;10; melting point 120 to 140°C;
density 950 to 980 kg/m³;
comonomer content 0.2 to 10% by weight; and
crystallinity 60 to 90%.

4. Use as claimed in any one of claims 1 to 3 wherein said HDPE has a weight ratio of low molecular weight fraction to high molecular weight fraction of 40:60 to 60:40.

5. An injection moulded liquids container the walls whereof are formed from a HDPE having a density of 950 to 980 kg/m³ and a crystallinity of 60 to 90% comprising at least two polyethylene components having different molecular weight distributions wherein at least one of said components is an ethylene copolymer.

6. A container as claimed in claim 5 formed from a said HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10; melting point 120 to 140°C;
density 950 to 980 kg/m³;
comonomer content 0.2 to 10% by weight; and
crystallinity 60 to 90%.

7. An injection or extrusion moulded cap or closure, which cap or closure is formed from a HDPE having a density of 950 to 980 kg/m³ and a crystallinity of 60 to 90% comprising at least two polyethylene components having different molecular weight distributions wherein at least one of said components is an ethylene copolymer.

8. A cap or closure as claimed in claim 7 formed from a said HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90%.

9. An extrusion coated structure having at least one extruded layer formed from a HDPE having a density of 950 to 980 kg/m³ and a crystallinity of 60 to 90% comprising at least two polyethylene components having different molecular weight distributions wherein at least one of said components is an ethylene copolymer.

10. A structure as claimed in claim 9 wherein said at least one extruded layer is formed from a HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90%.

11. A structure as claimed in claim 9 or claim 10 wherein said HDPE has a density of 955-975 kg/m³.

12. An HDPE having a density of 950 to 980 kg/m³ and a crystallinity of 60 to 90% for use in injection moulding or extrusion coating, comprising at least two polyethylene components having different molecular weight distributions, wherein at least one said component is an ethylene copolymer and wherein at least the component with the lowest weight average molecular weight is an ethylene homopolymer synthesised using a Ziegler-Natta or metallocene catalyst.

13. An HDPE comprising at least two polyethylene components, wherein at least one said component is an ethylene copolymer and wherein at least the component with the lowest weight average molecular weight is an ethylene homopolymer, and having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90%.

14. An HDPE moulding composition comprising a particulate HDPE as defined in claim 13 together with at least one additive or further polymer.

15. An injection moulded article formed at least in part from an HDPE having the following characteristics:
MFR₂ of from 2 to 100;
mean weight average molecular weight of from 80 to 200 kD;
MWD of from 5 to 100;
weight average molecular weight of a low molecular weight fraction of 20 to 40 kD;
weight average molecular weight of a high molecular weight fraction of 150 to 400 kD;
weight ratio of said low molecular weight fraction to said high molecular weight fraction of 10:90 to 90:10;
melting point 120 to 140°C;
density 950 to 980 kg/m³;
comonomer content 0.2 to 10% by weight; and
crystallinity 60 to 90%.

## Patentansprüche

1. Verwendung von HDPE beim Spritzgießen oder Extrusionsbeschichten, das eine Dichte von 950 bis 980 kg/m³ und eine Kristallinität von 60 bis 90 % aufweist und mindestens zwei Polyethylenkomponenten mit einer unterschiedlichen Molekulargewichtsverteilung umfaßt, wobei mindestens eine dieser Komponenten ein Ethylen-Copolymer ist.

2. Verwendung von HDPE nach Anspruch 1 für das Spritzgießen von Flüssigkeitsbehältern, Verschlüssen oder Deckeln.

3. Verwendung von HDPE nach Anspruch 1 oder 2, das folgende Eigenschaften aufweist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

4. Verwendung nach einem der Ansprüche 1 bis 3, wobei das HDPE ein Gewichtsverhältnis zwischen dem Anteil mit dem geringen Molekulargewicht und dem Anteil mit dem hohen Molekulargewicht von 40:60 bis 60:40 hat.

5. Durch Spritzgießen geformter Flüssigkeitsbehälter, dessen Wände aus einem HDPE hergestellt sind, das eine Dichte von 950 bis 980 kg/m³ und eine Kristallinität von 60 bis 90 % aufweist und das mindestens zwei Polyethylenkomponenten mit einer unterschiedlichen Molekulargewichtsverteilung umfaßt, wobei mindestens eine dieser Komponenten ein Ethylen-Copolymer ist.

6. Behälter nach Anspruch 5, der aus dem HDPE mit folgenden Eigenschaften hergestellt ist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

7. Durch Spritzgießen oder Extrusion geformter Deckel oder Verschluß, wobei der Deckel oder der Verschluß aus einem HDPE hergestellt ist, das eine Dichte von 950 bis 980 kg/m³ und eine Kristallinität von 60 bis 90 % aufweist und das mindestens zwei Polyethylenkomponenten mit einer unterschiedlichen Molekulargewichtsverteilung umfaßt, wobei mindestens eine dieser Komponenten ein Ethylen-Copolymer ist.

8. Deckel oder Verschluß nach Anspruch 7, der aus diesem HDPE mit folgenden Eigenschaften hergestellt ist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

9. Durch Extrusion beschichtete Struktur, die mindestens eine extrudierte Schicht aufweist, die aus einem HDPE erzeugt ist, das eine Dichte von 950 bis 980 kg/m³ und eine Kristallinität von 60 bis 90 % aufweist und die mindestens zwei Polyethylenkomponenten mit einer unterschiedlichen Molekulargewichtsverteilung umfaßt, wobei mindestens eine dieser Komponenten ein Ethylen-Copolymer ist.

10. Struktur nach Anspruch 9, wobei die zumindest eine extrudierte Schicht aus einem HDPE erzeugt ist, das die folgenden Eigenschaften aufweist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

11. Struktur nach Anspruch 9 oder Anspruch 10, wobei das HDPE eine Dichte von 955 bis 975 kg/m³ hat.

12. HDPE mit eine Dichte von 950 bis 980 kg/m³ und einer Kristallinität von 60 bis 90 % für die Verwendung beim Spritzgießen oder Extrusionsbeschichten, das mindestens zwei Polyethylenkomponenten mit einer unterschiedlichen Molekulargewichtsverteilung umfaßt, wobei mindestens eine dieser Komponenten ein Ethylen-Copolymer ist und wobei zumindest die Komponente mit dem niedrigsten Gewichtsmittel des Molekulargewichts ein Ethylen-Homopolymer ist, das unter Verwendung eines Ziegler-Natta- oder Metallocen-Catalysators synthetisiert worden ist.

13. HDPE, das mindestens zwei Polyethylenkomponenten umfaßt, wobei mindestens eine dieser Komponenten ein Ethylen-Copolymer ist und wobei mindestens die Komponenten mit dem niedrigsten Gewichtsmittel des Molekulargewichts ein Ethylen-Homopolymer ist, und das folgende Eigenschaften aufweist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

14. HDPE-Zusammensetzung zum Formen, die ein partikelförmiges HDPE nach Anspruch 13 zusammen mit mindestens einem Zusatz oder einem weiteren Polymer umfaßt.

15. Durch Spritzgießen geformter Gegenstand, der zumindest teilweise aus einem HDPE geformt ist, das die folgenden Eigenschaften aufweist:
MFR₂ 2 bis 100,
Gewichtsmittel des Molekulargewichts 80 bis 200 kD,
MWD 5 bis 100,
Gewichtsmittel des Molekulargewichts des Anteils mit einem geringen Molekulargewicht 20 bis 40 kD,
Gewichtsmittel des Molekulargewichts des Anteils mit einem hohen Molekulargewicht 150 bis 400 kD,
Gewichtsverhältnis zwischen dem Anteil mit dem geringen Molekulargewicht und dem Anteil mit dem hohen Molekulargewicht 10:90 bis 90:10,
Schmelzpunkt 120 bis 140°C,
Dichte 950 bis 980 kg/m³,
Comonomergehalt 0,2 bis 10 Gew.-% und
Kristallinität 60 bis 90 %.

## Revendications

1. Utilisation pour un moulage par injection ou une enduction par extrusion d'un PEHD ayant une densité comprise entre 950 et 980 kg/m³ et un taux de cristallinité de 60 à 90%, comprenant au moins deux composants en polyéthylène ayant des distributions différentes de poids moléculaire, dans laquelle l'un au moins des dits composants est un copolymère d'éthylène.

2. Utilisation selon la revendication 1, d'un dit PEHD pour le moulage par injection de conteneur de liquides, de capsules ou de bouchons.

3. Utilisation selon l'une ou l'autre des revendications 1 ou 2 d'un PEHD présentant les caractéristiques suivantes :
Indice de fusion MFR₂ de 2 à 100 ;
Poids moyen d'une masse moléculaire moyenne de 80 à 200 kD ;
Distribution de poids moléculaire (DPM) de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C
Densité de 950 à 980 kg/m³ ;
Teneur en comonomère de 0,2 à 10% en poids ; et
Taux de cristallinité de 60 à 90%.

4. Utilisation selon l'une quelconque des revendications 1 à 3, dans lesquelles ledit PEHD a un rapport pondéral entre la fraction à faible poids moléculaire et la fraction à poids moléculaire élevé de 40/60 à 60/40.

5. Récipient pour liquides moulé par injection dont les parois sont composées d'un PEHD ayant une densité de 950 à 980 kg/m³ et un taux de cristallinité de 60 à 90%, comprenant au moins deux composants en polyéthylène ayant des distributions différentes de poids moléculaire, dans lequel un au moins desdits composants est un copolymère d'éthylène.

6. Récipient selon la revendication 5 formé dudit PEHD présentant les caractéristiques suivantes :
Indice de fusion MFR₂ de 2 à 100 ;
Poids moyen d'une masse moléculaire moyenne de 80 à 200 kD ;
DPM de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C ;
Densité de 950 à 980 kg/m³
Teneur en comonomère de 0,2 à 10% en poids ;
Taux de cristallinité de 60 à 90%.

7. Capsule ou bouchon moulé par injection ou extrusion, laquelle capsule ou bouchon est formé d'un PEHD ayant une densité de 950 à 980 kg/m³ et un taux de cristallinité de 60 à 90% comprenant au moins deux composants en polyéthylène ayant des distributions différentes de poids moléculaire, dans lequel l'un au moins des deux composants est un copolymère d'éthylène.

8. Capsule ou bouchon selon la revendication 7, formé dudit PEHD présentant les caractéristiques suivantes :
Indice de fusion MFR₂ de 2 à 100 ;
Poids moyen d'une masse moléculaire moyenne de 80 à 200 kD ;
DPM de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C ;
Densité 950 à 980 kg/m³ ;
Teneur en comonomère de 0,2 à 10% en poids ;
Taux de cristallinité de 60 à 90%.

9. Structure enduite par extrusion ayant au moins une couche extrudée formée d'un PEHD ayant une densité de 950 à 980 kg/m³ et un taux de cristallinité de 60 à 90%, comprenant au moins deux composants polyéthylène ayant des distributions différentes de poids moléculaire, dans laquelle l'un au moins des deux composants est un copolymère d'éthylène.

10. Structure selon la revendication 9, dans laquelle la dite au moins une couche extrudée est constituée d'un PEHD présentant les caractéristiques suivantes :
Indice de fusion MFR₂ de 2 à 100 ;
Poids moyen d'une masse moléculaire de 80 à 200 kD ;
DPM de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C ;
Densité de 950 à 980 kg/m³ ;
Teneur en comonomère de 0,2 à 10% en poids ;
Taux de cristallinité de 60 à 90%.

11. Structure selon la revendication 9 ou 10, dans laquelle ledit PEHD a une densité de 955-975 kg/m³.

12. PEHD ayant une densité de 950 à 980 kg/m³ et un taux de cristallinité de 60 à 90% pour utilisation dans un moulage par injection ou une enduction par extrusion, comprenant au moins deux composants en polyéthylène ayant des distributions différentes de poids moléculaire, dans lequel l'un au moins des dits composants est un copolymère d'éthylène et dans lequel au moins le composant ayant le plus faible poids moyen de masse moléculaire est un homopolymère d'éthylène synthétisé à l'aide d'un catalyseur Ziegler-Natta ou d'un catalyseur métallocène.

13. PEHD comprenant au moins deux composants en polyéthylène, dans lequel l'un au moins des dits composants est un copolymère d'éthylène et dans lequel au moins le composant ayant le plus faible poids moyen de masse moléculaire est un homopolymère d'éthylène, et présentant les caractéristiques suivantes :
Indice de fusion MFR₂ de 2 à 100 ;
Poids moyen d'une masse moléculaire moyenne de 80 à 200 kD ;
DPM de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C ;
Densité de 950 à 980 kg/m³ ;
Teneur en comonomère de 0.2 à 10% par masse ;
Taux de cristallinité de 60 à 90%

14. Composition pour moulage de PEHD comprenant un PEHD particulaire selon la revendication 13 ainsi qu'au moins un additif ou autre polymère.

15. Article moulé par injection formé au moins en partie d'un PEHD présentant les caractéristiques suivantes :
Indice de fusion MFR₂ de 2 à 100 ;
Poids moyen d'une masse moléculaire moyenne de 80 à 200 kD ;
DMP de 5 à 100 ;
Poids moyen de la masse moléculaire d'une fraction à faible poids moléculaire de 20 à 40 kD ;
Poids moyen de la masse moléculaire d'une fraction à poids moléculaire élevé de 150 à 400 kD ;
Rapport pondéral entre ladite fraction à faible poids moléculaire et ladite fraction à poids moléculaire élevé de 10/90 à 90/10;
Point de fusion de 120 à 140°C
Densité de 950 à 980 kg/m³ ;
Teneur en comonomère de 0,2 à 10% par masse ;
Taux de cristallinité de 60 à 90%.
